**Europäisches Patentamt**

**European Patent Office**

**Office européen des brevets**

(11) Veröffentlichungsnummer: **0 393 294**

**A1**

(12) # EUROPÄISCHE PATENTANMELDUNG

(21) Anmeldenummer: **89810347.8**

(22) Anmeldetag: **11.05.89**

(51) Int. Cl.5: **G01F 3/10**

(30) Priorität: **17.04.89 CH 1451/89**

(43) Veröffentlichungstag der Anmeldung:
**24.10.90 Patentblatt 90/43**

(84) Benannte Vertragsstaaten:
**CH DE FR GB IT LI**

(71) Anmelder: **DOPAG AG**
**Hinterbergstrasse 32**
**CH-6330 Cham(CH)**

(72) Erfinder: **Suter, Peter**
**Hofmatt 36**
**CH-6332 Hagendorn(CH)**

(74) Vertreter: **Eder, Carl E. et al**
**Patentanwaltsbüro EDER AG**
**Lindenhofstrasse 40**
**CH-4052 Basel(CH)**

(54) **Durchflussvolumenzähler.**

(57) Bei einem Durchflusszylinder mit in einer Messkammer frei drehbar gelagerten Zahnrädern werden die Zähne gezählt. Da wegen des hohen Innendrucks gute Dichtungen für eine nach aussen geführte Zahnradwelle nötig wären, die ihrerseits grosse Reibungskräfte auf die Welle ausüben, ist es bekannt, einen magnetischen Abgriff zu machen. Dazu wird ein magnetischer Feldleiter benötigt, der üblicherweise aus zwei magnetisch leitenden Stäben besteht. Da diese auf der Seite der Zahnräder einen durch die Grösse der Zahnräder bestimmten Abstand, auf der anderen Seite aber einen durch die Grösse eines Feldplattendifferentialfühlers bestimmten Abstand haben müssen, ist schon vorgeschlagen worden, Stifte schief einzusetzen. Dies ist aber mit Nachteilen in der Herstellung verbunden. Nach der vorliegenden Erfindung wird nun eine Platte (12a) aus magnetisch leitendem Material verwendet, in welcher eine Hülse (12b) aus magnetisch nicht leitendem Material sitzt, in welcher sich ein Stift (12c) aus magnetisch leitendem Material befindet. Die Wandung der Hülse ist an dem dem Zahnrad zugewandten Ende dicker als an dem dem Feldplattendifferentialfühler zugewandten Ende.

Fig. 3

EP 0 393 294 A1

## Durchflussvolumenzähler

Die vorliegende Erfindung betrifft einen Durchflussvolumenzähler für Flüssigkeiten oder Gase. Derartige Geräte weisen eine mit einer Eingangsleitung und einer Ausgangsleitung versehene Messkammer sowie zwei miteinander kämmende, in der Messkammer frei drehbar gelagerte und die Messkammer im wesentlichen ausfüllende Zahnräder auf und dazu zwei in der Messkammerwandung eingesetzte magnetische Sensoren, die je einen magnetischen Feldleiter und einen Feldplattendifferentialfühler zur Steuerung einer elektronischen Schaltung in Abhängigkeit von den sich an den Sensoren vorbeibewegenden Zahnradzähne aufweisen. Als Feldleiter wird üblicherweise ein Einsatz aus unmagnetischem Material verwendet, in welchem zwei Stifte aus magnetisch leitendem Material eingesetzt sind, wobei die Distanz zwischen den Stiftenden auf der den Zahnrädern zugewandten Seite der Grösse der Zahnräder angepasst, auf der den Zahnrädern abgewandten Seite jedoch dem Feldplattendifferentialfühler angepasst sein sollte. Das hat zur Folge, dass die Stifte schief zur Gehäusefläche eingesetzt werden müssen, was aus bearbeitungstechnischen Gründen an und für sich unerwünscht ist. Dieser Nachteil wird nun beim erfindungsgemässen Durchflussvolumenzähler der vorliegenden Art dadurch umgangen, dass jeder magnetische Feldleiter aus einer Platte aus magnetisch leitendem Material, einer durchgehenden Hülse aus magnetisch nicht leitendem Material und einem in der Hülse steckenden Stift aus magnetisch leitendem Material besteht, wobei die Wandung der Hülse an der dem Zahnrad zugewandten Ende dicker ist an dem dem Zahnrad abgewandten Ende.

Nachfolgend wird anhand der beiliegenden Zeichnung ein Ausführungsbeispiel der Erfindung beschrieben. In der Zeichnung zeigt:

die Figur 1 eine Draufsicht auf einen erfindungsgemässen Durchflussvolumenzähler, wobei einzelne an sich nicht sichtbare Teile gestrichelt gezeichnet sind,

die Figur 2 einen Teil eines Schnittes durch den Zähler nach der Linie II - II der Figur 1,

die Figur 3 einen Schnitt durch den magnetischen Feldleiter nach der Linie III - III der Figur 4, die eine Draufsicht auf den Feldleiter vor seinem Einbau darstellt und zwar in Richtung des Pfeiles IV in der Figur 3 gesehen.

Das aus zwei Hälften 1 und 2 zusammengesetzte Gehäuse weist eine Messkammer 3 auf, in der die beiden Zahnräder 4 und 5, die die Kammer im wesentlichen ausfüllen, frei drehbar gelagert sind, das Zahnrad 4 mittels eines Wälzlagers 6 auf der Achse 8 und das Zahnrad 5 mittels eines Wälzlagers 7 auf der Achse 9. Von den beiden Anschlussstellen 10 und 11 dient die eine zum Anschluss der Eingangsleitung und die andere zum Anschluss der Ausgangsleitung. Beim Durchströmen einer Flüssigkeit oder eines Gases drehen sich dann die miteinader kämmenden Zahnräder so, dass die Flüssigkeit von der als Eingang dienenden Anschlussstelle entlang den beiden zylindrischen Wandabschnitten der Kammer zur anderen Anschlussstelle strömt und dabei die Zahnräder 4 und 5 dreht.

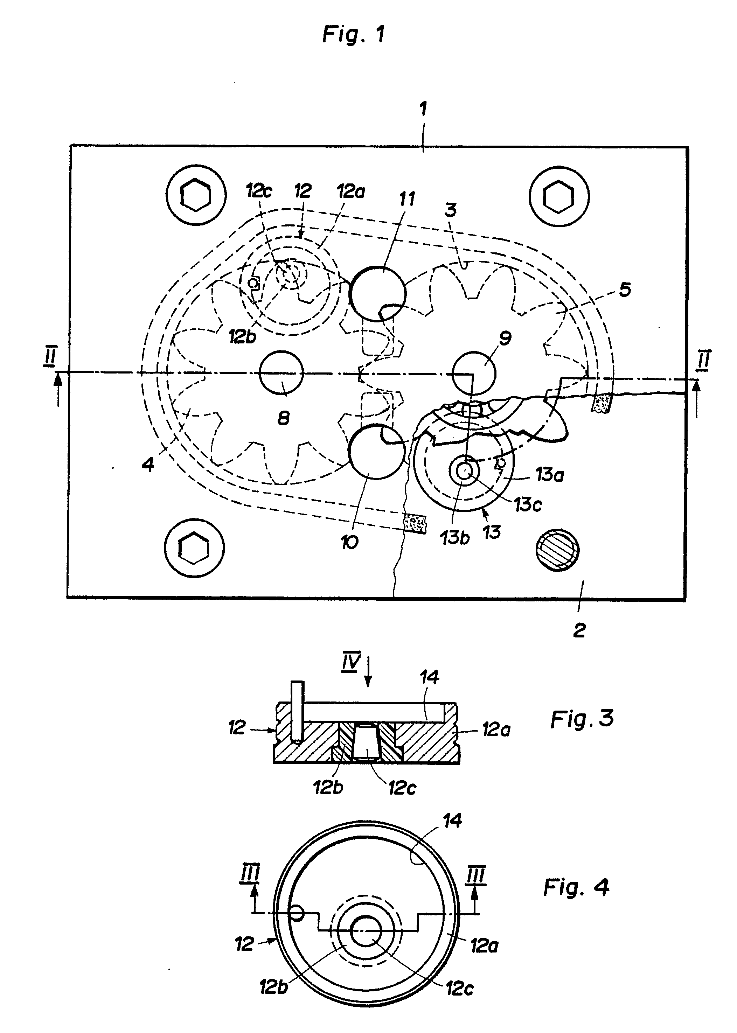

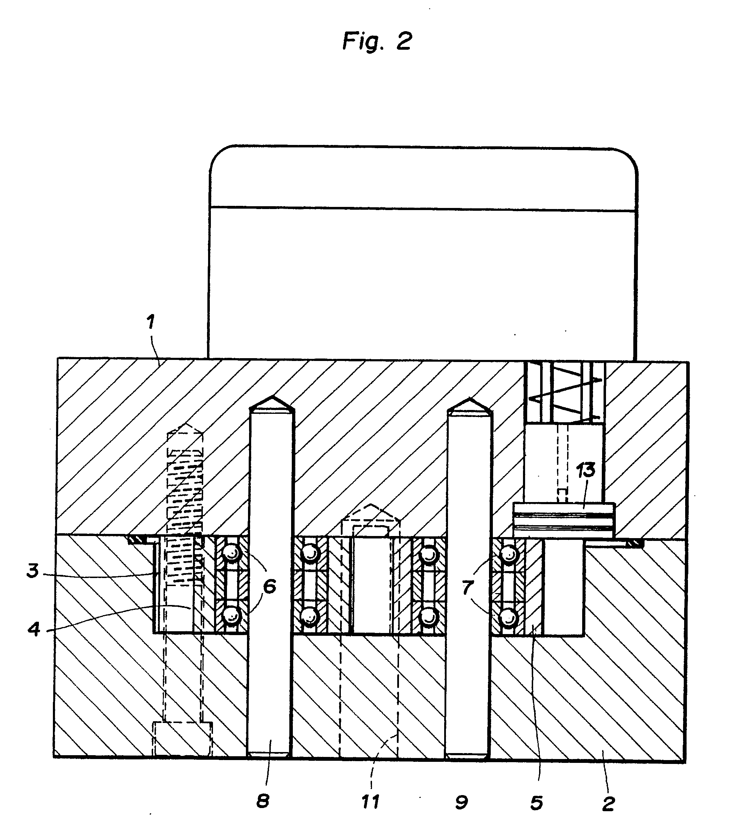

In der Gehäusehälfte 2 sind nun die beiden je als Ganzes mit 12 bzw. 13 bezeichneten magnetischen Feldleiter eingesetzt, von denen jeder eine scheibenförmige Platte 12a bzw. 13a aus magnetisch leitendem Material aufweist, in welcher etwa exzentrisch eine durchgehende Hülse 12b bzw. 13b aus magnetisch nicht leitendem Material sitzt. In dieser Hülse steckt ein vorzugsweise leicht konischer Stift 12c bzw. 13c aus magnetisch leitendem Material. In dem in der Figur 3 dargestellten Ausführungsbeispiel sitzt die Hülse 12b, die aussen eine abgestufte Form hat, in einer entsprechend abgestuften Bohrung der Platte 12a. Es ist jedoch nicht nötig, dass die Hülse 12b eine abgestufte Innenform hat, sie könnte auch konisch sein, wichtig ist nur, dass die Dicke der Hülse an dem dem Zahnrad, also der Messkammer zugewandten Ende dicker ist als an dem dem Zahnrad abgewandten Ende, an welchem die Ausnehmung 14 Platz für die Aufnahme des Feldplattendifferentialfühlers bietet. An diesem Ende ist die Wandstärke der Hülse den Abmessungen des Feldplattendifferentialfühlers angepasst, während sie auf der anderen Seite an die Abmessungen der Zähne des Zahnrads angepasst ist. Auf diese Art und Weise lässt sich nicht nur eine optimale Qualität der bei der Erfassung und Übertragung durch die Bewegungen der Zahnräder erzeugten magnetischen Impulse erhalten sondern auch eine zweckmässige Fabrikation. Da der Druck in der Kammer 3 stets grösser ist als der Aussendruck, besteht keine Gefahr, dass der im Kammerinnern herrschende Druck ein Lockern oder Lösen der satt eingepressten oder eingeklebten Teile bewirken kann.

**Ansprüche**

1. Durchflussvolumenzähler für Flüssigkeiten oder Gase mit
- einer mit einer Eingangsleitung (10) und einer Ausgangsleitung (11) versehenen Messkammer (3),
- zwei mit einander kämmenden, in der Messkammer frei drehbar gelagerten und diese im wesentlichen ausfüllenden Zahnrädern (4, 5),
- zwei in der Messkammerwandung eingesetzten magnetischen Sensoren, die je einen magnetischen Feldleiter und einen Feldplattendifferentialfühler zur Steuerung einer elektronischen Schaltung in Abhängigkeit von den sich an den Sensoren vorbeibewegenden Zahnradzähnen (4, 5) aufweisen, dadurch gekennzeichnet, dass jeder magnetische Feldleiter aus einer Platte (12a) aus magnetisch leitendem Material, einer durchgehenden Hülse (12b) aus magnetisch nicht leitendem Material und einem in der Hülse steckenden Stift (12c) aus magnetisch leitendem Material besteht, wobei die Wandung der Hülse (12b) an dem dem Zahnrad zugewandten Ende dicker ist als an dem dem Zahnrad abgewandten Ende.

2. Durchflussvolumenzähler nach Anspruch 1, dadurch gekennzeichnet, dass die Hülse innen und aussen konisch ist, in einem entsprechend konischen Loch sitzt und dass auch der Stift konisch ist.

3. Durchflussvolumenzähler nach Anspruch 1, dadurch gekennzeichnet, dass die Hülse (12b) eine aussen abgestufte Form aufweist und in einer entsprechend abgestuften Bohrung sitzt.

**Fig. 1**

**Fig. 3**

**Fig. 4**

## Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| A | EP-A-0053575 (KRACHT)<br>* Seite 4, Zeile 4 - Seite 5, Zeile 26 *<br>* Seite 8, Zeile 1 - Seite 9, Zeile 24; Figuren 1, 3, 6, 7 *<br>--- | 1 | G01F3/10 |
| A | AUTOMATISIERUNGSTECHNISCHE PRAXIS - ATP.<br>vol. 30, no. 4, 1988, MUNCHEN DE<br>Seiten 163 - 171; G. Strohrmann:<br>"atp-Marktanalyse Mengenmesstechnik"<br>* Seite 165; Figur 26 *<br>--- | 1 | |
| A | CH-A-121848 (W. WERMEILLE)<br>* Seite 2, rechte Spalte, Absatz 2; Figuren 3, 4 *<br>----- | 2 | |
| | | | **RECHERCHIERTE SACHGEBIETE (Int. Cl.5)**<br><br>G01F |

Der vorliegende Recherchenbericht wurde für alle Patentansprüche erstellt

| Recherchenort | Abschlußdatum der Recherche | Prüfer |
| --- | --- | --- |
| DEN HAAG | 07 AUGUST 1990 | HEINSIUS R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument